(19) **Europäisches Patentamt / European Patent Office / Office européen des brevets**

(11) **EP 2 472 208 B1**

(12) **EUROPEAN PATENT SPECIFICATION**

(45) Date of publication and mention of the grant of the patent:
**25.03.2015 Bulletin 2015/13**

(21) Application number: **11744609.6**

(22) Date of filing: **15.02.2011**

(51) Int Cl.:
**F28D 15/02** *(2006.01)*    **F01N 5/02** *(2006.01)*

(86) International application number:
**PCT/JP2011/053076**

(87) International publication number:
**WO 2011/102323 (25.08.2011 Gazette 2011/34)**

(54) **EXHAUST HEAT RECOVERY DEVICE**

ABGASWÄRMERÜCKGEWINNUNGSVORRICHTUNG

DISPOSITIF DE RÉCUPÉRATION DE CHALEUR DE GAZ D'ÉCHAPPEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2010 JP 2010033657**

(43) Date of publication of application:
**04.07.2012 Bulletin 2012/27**

(73) Proprietor: **TOYOTA JIDOSHA KABUSHIKI KAISHA**
**Toyota-shi, Aichi-ken, 471-8571 (JP)**

(72) Inventors:
• **SAKABE, Motoya**
  **Toyota-shi**
  **Aichi 471-8571 (JP)**
• **WAKATSUKI, Kazutoshi**
  **Toyota-shi**
  **Aichi 471-8571 (JP)**
• **KOMITSU, Hideyuki**
  **Toyota-shi**
  **Aichi 471-8571 (JP)**
• **MUKOUBARA, Yuuki**
  **Kariya-city**
  **Aichi 448-8661 (JP)**
• **MURAMATSU, Kenshirou**
  **Kariya-city**
  **Aichi 448-8661 (JP)**

(74) Representative: **Albutt, Anthony John et al**
**D Young & Co LLP**
**120 Holborn**
**London EC1N 2DY (GB)**

(56) References cited:
**WO-A2-2009/112946**    **WO-A2-2010/015940**
**FR-A- 875 664**    **JP-A- 3 045 416**
**JP-A- 7 120 178**    **JP-A- 2009 222 253**
**JP-A- 2010 223 060**    **US-A- 5 156 208**
**US-A1- 2007 000 453**

• **DATABASE WPI Section PQ, Week 200819 Thomson Scientific, London, GB; Class Q78, AN 2008-C49607 XP002717577, -& CN 101 029 803 A (PANG LISHENG) 5 September 2007 (2007-09-05)**

**Description**

**Technical Field**

The present invention relates to an exhaust heat recovery apparatus disposed in an internal combustion engine and the like to promote temperature rising of a suitable heating target by recovering exhaust heat. In particular, the present invention relates to a measure for improving exhaust heat recovery efficiency.

Conventionally, exhaust heat recovery apparatuses are known to recover the heat of exhaust gas from an internal combustion engine (referred to below as an engine) installed in a vehicle such as an automobile using a heat pipe so as to promote engine warm-up (for example, see patent literatures PLT 1 and PLT 2 listed below).

An exhaust heat recovery apparatus of this type includes a heat recovering unit and a condensing unit. In the heat recovering unit, a heat medium (for example, a coolant such as water) is vaporized by the heat of the exhaust gas. Next, this gas phase heat medium is delivered to the condensing unit, and in the condensing unit, heat exchange is carried out between the heat medium and the engine coolant so as to rapidly raise the temperature of the coolant. This reduces the engine warm-up time and improves the fuel consumption rate.

The heat medium that has undergone heat exchange with the coolant in the condensing unit is condensed and returned to the heat recovering unit. Then, in the heat recovering unit, the heat medium is once again vaporized by the heat of the exhaust gas and delivered to the condensing unit, thus completing a cycle.

**Citation List**

**Patent Literature**

PTL 1: JP 2009-8318 A
PTL 2: JP 2007-170299 A

US2007/0000453 relates to a heat exchange apparatus.
FR875664 relates to heating devices in particular for aircrafts

**Summary of Invention**

**Technical Problem**

Unfortunately, with the conventional exhaust heat recovery apparatus, the extent to which the heat recovery efficiency can be increased is limited in terms of the following points, and there is a demand for improvements that would further increase the exhaust heat recovery efficiency.

Specifically, in the condensing unit of the conventional exhaust heat recovery apparatus, the space through which the engine coolant flows is exposed to the atmosphere via the outer walls of the condensing unit. This creates a high possibility of a large amount of the heat of the coolant being emitted (being released) into the atmosphere through the outer walls of the condensing unit. That is, while the coolant that has received heat from the heat medium (for example, steam) is flowing within the condensing unit, a large amount of heat is released into the atmosphere through the outer walls of the condensing unit, thus lowering the temperature of the coolant. This results in a heat loss corresponding to the amount of heat thus released. The outer walls of the condensing unit are in many cases made of stainless steel considering corrosion resistance and the like. The stainless steel is a material having a relatively high heat conductivity (a higher heat conductivity than that of hoses for carrying the engine coolant), which facilitates release of the heat into the atmosphere.

Also with the conventional exhaust heat recovery apparatus, most of the heat medium (steam) that is sent to the condensing unit is blown directly toward the inner walls of the condensing unit. In such configuration, similarly to the above-described case of heat loss concerning the coolant, there is a possibility of a large amount of the heat of the heat medium being emitted into the atmosphere through the outer walls of the condensing unit. That is, a considerable amount of the heat delivered to the condensing unit by the heat medium is emitted into the atmosphere through the outer walls of the condensing unit, instead of being provided to the coolant, resulting in an increased heat loss by an amount corresponding to the amount of heat thus released.

The present invention has been made in view of the above circumstances, and it is an object of the present invention to provide an exhaust heat recovery apparatus capable of minimizing the amount of heat loss in the condensing unit, and thereby greatly increasing the exhaust heat recovery efficiency.

Solution to Problem

-Principle of Solution to the Problems-

The principle of solution of the present invention to achieve the above object is such that a pipe through which a heating target fluid flows (to-be-heated fluid) is disposed in an inner space of a heat releasing unit (condensing unit) where heat exchange is carried out between a fluid heated by the exhaust heat (heating fluid) and the heating target fluid, and the heating fluid introduced into the inner space of the heat releasing unit blows directly against this pipe, so as to reduce both the amount of external release of heat that the heating target fluid has received and the amount of external release of heat from the heating fluid, thereby greatly reducing the amount of loss of heat.

-Solution Means-

Specifically, according to a basic aspect of the present invention, an exhaust heat recovery apparatus, includes: a heat receiving unit configured to heat and vaporize a fluid with heat from exhaust gas; a heat releasing unit configured to receive the fluid in gas phase (gas phase fluid) vaporized in the heat receiving unit and to heat a heating target fluid with the gas phase fluid; a fluid supply pipe through which the gas phase fluid vaporized in the heat receiving unit is supplied to an inner space of the heat releasing unit; and a return path through which the fluid in liquid phase condensed in the heat releasing unit is returned to the heat receiving unit. In the exhaust heat recovery apparatus, the heat releasing unit includes a heating target flow path pipe disposed in the inner space of the heat releasing unit. The fluid supply pipe is separated from the return path so that the fluid heated by the heat from the exhaust gas is circulated sequentially via the heat receiving unit, the fluid supply pipe, the heat releasing unit and then the return path. The heating target flow path pipe includes: a first pipe portion constituting an inflow route for the heating target fluid into the inner space; and a second pipe portion coupled to the first pipe portion via a bent pipe portion that is bent in the inner space or at an exterior of the inner space. The second pipe portion constitutes an outflow route for the heating target fluid from the inner space. The fluid supply pipe has an opening in the inner space of the heat releasing unit. The opening is positioned at the centre of the heat releasing unit in a plane view of the heat releasing unit and the first pipe portion, and the second pipe portion are positioned between the fluid supply pipe and side surfaces of a casing of the heat releasing unit in a plane view of the heat releasing unit.

According to this feature, a fluid is heated and vaporized by heat from exhaust gas in the heat receiving unit. The fluid in gas phase is supplied to the heat releasing unit via the fluid supply pipe and exchanges heat with a heating target fluid flowing inside the heating target flow path pipe, which is disposed at the interior of the heat releasing unit Consequently, the heating target fluid is heated. The fluid, after heating the heating target fluid, is condensed and returned to the heat receiving unit via the return path. With such configuration that allows circulation of fluid, in the heat releasing unit, the fluid supply pipe has an opening which is positioned to supply the gas phase fluid to a space between the first pipe portion and the second pipe portion. This ensures that the gas phase fluid flows directly toward the outer surfaces of the first pipe portion and the second pipe portion. That is, while limiting the amount of release of heat of the gas phase fluid through the outer walls of the heat releasing unit, the majority of the heat contributes to heating the heating target fluid, via the first pipe portion and the second pipe portion. Also, the heating target fluid flows within the heating target flow path pipe in the inner space of the heat releasing unit, which causes substantially no release of the heat that the heating target fluid receives through the outer walls of the heat releasing unit. As a result, the heating target fluid flows out from the heat releasing unit while maintaining approximately all of the heat received from the gas phase fluid. This greatly reduces the amount of external release of heat both for the gas phase fluid and the heating target fluid, and facilitates the attempt to improve the exhaust heat recovery efficiency.

In a preferred configuration, the bent pipe portion may be disposed in the inner space of the heat releasing unit to couple the first pipe portion to the second pipe portion. Also in the preferred configuration, the opening of the fluid supply pipe may be positioned to supply the gas phase fluid to a space surrounded by the first pipe portion, the bent pipe portion, and the second pipe portion.

With this configuration, most of the gas phase fluid supplied from the fluid supply pipe to the inner space of the heat releasing unit flows directly toward the outer surfaces of the first pipe portion, the bent pipe portion, and the second pipe portion. This greatly limits the amount of release of heat of the gas phase fluid through the outer walls of the heat releasing unit, thus facilitating the attempt to greatly improve the exhaust heat recovery efficiency.

The following is one specific configuration of disposition of the heat receiving unit and the heat releasing unit. The one configuration is such that the heat releasing unit may be disposed directly above the heat receiving unit. Also in this configuration, the fluid supply pipe may couple a top portion of the heat receiving unit to a bottom portion of the heat releasing unit to allow mutual communication between an inner space of the heat receiving unit and the inner space of the heat releasing unit.

Disposing the heat releasing unit directly above the heat receiving unit in this manner reduces heat loss during transfer of the gas phase fluid from the heat receiving unit to the heat releasing unit. That is, the length dimension of the fluid supply pipe is shortened, which limits the amount of release of heat through the surface of the fluid supply pipe. This ensures that most of the heat obtained in the heat receiving unit is supplied to the heat releasing unit. This facilitates the attempt to improve the heat exchange efficiency in the heat releasing unit.

The invention also relates to a vehicle comprising the heat recovery apparatus, wherein the exhaust heat recovery apparatus is configured to recover heat from exhaust gas discharged from an internal combustion engine installed in the vehicle, and the heat receiving unit and the heat releasing unit are housed in a space below a tunnel portion formed on a vehicle floor.

With this configuration, when the vehicle is running, running wind enters the interior of the tunnel portion on the vehicle floor and flows along the bottom face and side faces of the heat receiving unit of the exhaust heat recovery apparatus. That is, substantially no running wind flows over the side faces and the bottom face of the heat releasing unit, causing substantially no loss of heat from the heat releasing unit associated with the running wind. This greatly reduces the amount of external release of heat both from the gas phase fluid and the heating target fluid (the amount of heat loss due to the running wind), and facilitates the attempt to greatly improve the exhaust heat recovery efficiency.

Also in this case, the first pipe portion and the second pipe portion are positioned between the fluid supply pipe and side surfaces of a casing of the heat releasing unit, in a plan view of the heat releasing unit.

This ensures that, even if a fluid condensed due to the heat exchange in the heat releasing unit drips down from the first pipe portion or the second pipe portion under the fluids own weight, the fluid (liquid phase fluid) will not return to the heat receiving unit via the fluid supply pipe, but rather will return to the heat receiving unit by flowing down to the return path. This eliminates backflow in the circulation of the fluid and ensures smooth circulation operations, achieving efficient heat recovery.

Also, the fluid supply pipe may have an upper end in the inner space of the heat releasing unit preferably at a height position that is same as a lower end height of each of the first pipe portion and the second pipe portion, or that is lower than the lower end height of each of the first pipe portion and the second pipe portion.

This ensures that the gas phase fluid supplied to the inner space of the heat releasing unit spreads out horizontally from the upper end of the fluid supply pipe. Most of the gas phase fluid flows toward the outer surfaces of the first pipe portion and the second pipe portion, without being blown directly against the top surface of the heat releasing unit. This facilitates the attempt to improve the heat exchange efficiency in the heat releasing unit.

Also in the exhaust heat recovery apparatus of the first pipe portion, the second pipe portion, and the bent pipe portion are preferably respectively positioned to a rightward of the vehicle, to a leftward of the vehicle, and to a frontward or rearward of the vehicle relative to the upper end of the fluid supply pipe.

This increases the ratio of the steam that is blown directly against the outer surface of the heating target flow path pipe to the steam supplied from the fluid supply pipe to the inner space of the heat releasing unit. This, as a result, facilitates the attempt to further improve the heat recovery efficiency. Moreover, since the first pipe portion and the second pipe portion are positioned to the right and the left of the upper end of the fluid supply pipe, the first pipe portion and the second pipe portion extend in the forward/backward direction of the vehicle. Thus, simply by extending the first pipe portion and the second pipe portion, the pipe through which the heating target fluid is supplied to its destination is disposed in a region within the tunnel portion where relatively little running wind flows. Thus, this simple piping configuration reduces the amount of external release of heat from the heating target fluid (the amount of heat loss due to the running wind), and facilitates the attempt to improve the exhaust heat recovery efficiency.

Also, the first pipe portion, the bent pipe portion, and the second pipe portion are preferably disposed on a common imaginary horizontal plane.

This reduces the size of the heat releasing unit in the vertical direction, and ensures that the heat releasing unit is disposed in a region within the tunnel portion where there is relatively little running wind. This, as a result, reduces the amount of external release of heat both for the gas phase fluid and the heating target fluid (the amount of heat loss due to the running wind), and facilitates the attempt to improve the exhaust heat recovery efficiency.

**Advantageous Effects of Invention**

In the present invention, a pipe through which a heating target fluid flows is disposed in an inner space of a heat releasing unit where heat exchange is carried out between a fluid heated by the exhaust heat and the heating target fluid, and the heating fluid introduced into the inner space of the heat releasing unit blows directly against this pipe. This greatly reduces the amount of external release of heat both for the gas phase fluid and the heating target fluid, and facilitates the attempt to improve the exhaust heat recovery efficiency.

**Brief Description of Drawings**

[fig. 1] FIG. 1 is a diagram illustrating a schematic configuration of a heat recovery system according to an embodiment.

[fig. 2] FIG. 2 is a perspective view of the exhaust heat recovery apparatus illustrating a manner of its installment.

[fig. 3] FIG. 3 is a view, seen from the front of a vehicle, of the exhaust heat recovery apparatus illustrating a manner of its installment.

[fig. 4] FIG. 4 is a perspective view of a core of a heat recovering unit.

[fig. 5] FIG. 5 is a cross-sectional view of the exhaust heat recovery apparatus, seen from the front of the vehicle.

[fig. 6] FIG 6 is a cross-sectional view taken along the line VI-VI of FIG. 3.

[fig. 7A] FIG. 7 is a view of one modification corresponding to FIG 6.

[fig. 7B] FIG. 7B is a view of another modification corresponding to FIG 6.

[fig.7C] FIG. 7C is a view of still another modification corresponding to FIG. 6.

[fig. 7D] FIG. 7D is a view of still another modification corresponding to FIG. 6.

## Description of Embodiments

Embodiments of the present invention will be described below by referring to the drawings. In this embodiment, description will be given regarding a case of the present invention applied to an exhaust heat recovery apparatus disposed in a multi-cylinder gasoline engine (internal combustion engine) installed in an automobile.

□Exhaust Heat Recovery System□

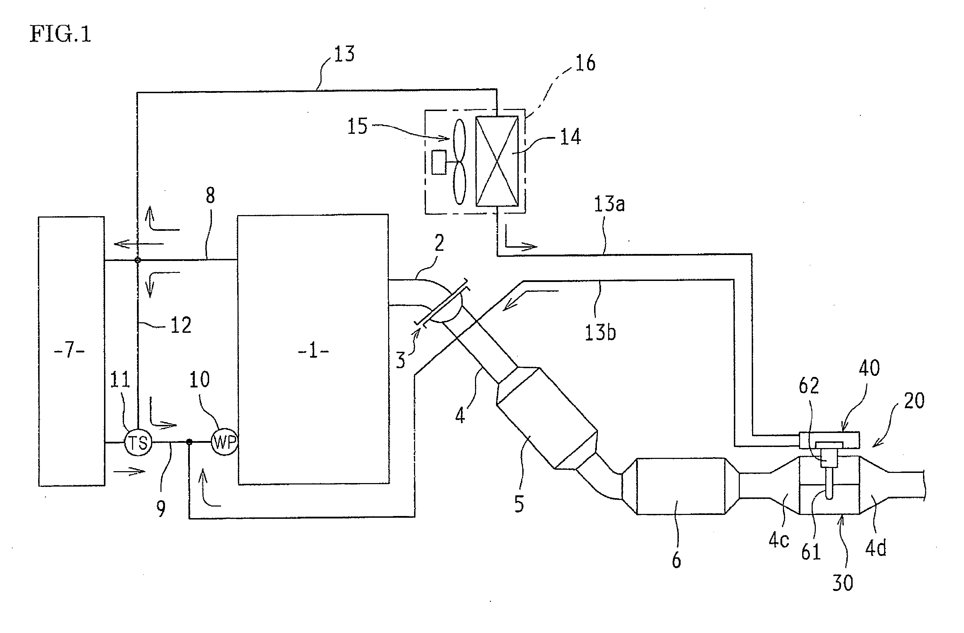

FIG. 1 illustrates a schematic configuration of an exhaust heat recovery system disposed in an engine 1 according to this embodiment.

The engine 1 according to this embodiment supplies a mixed gas, which is obtained by mixing air supplied from an air intake system and fuel supplied from a fuel supply system at a suitable air/fuel ratio, to a combustion chamber to combust the mixed gas, and then evacuates exhaust gas produced as a result of the combustion into the atmosphere via an exhaust system.

The exhaust system at least includes an exhaust manifold 2 mounted on the engine 1, and an exhaust pipe 4 coupled to the exhaust manifold 2 via a spherical joint 3. Thus, the exhaust manifold 2 and the exhaust pipe 4 form an exhaust route.

The spherical joint 3 allows a suitable amount of swinging motion between the exhaust manifold 2 and the exhaust pipe 4, and serves to prevent or attenuate the transmission of vibration and movement from the engine 1 to the exhaust pipe 4.

Two catalysts 5 and 6 in series are disposed on the exhaust pipe 4. Exhaust gas is purified by these two catalysts 5 and 6.

The catalyst 5, of the catalysts 5 and 6, is disposed upstream on the exhaust pipe 4 in the direction of flow of the exhaust gas, and is referred to as what is called a start catalyst (S/C). The catalyst 5 will be hereinafter referred to as the upstream catalyst 5. Meanwhile, the catalyst 6 is disposed downstream on the exhaust pipe 4 in the direction of flow of the exhaust gas, and is referred to as what is called a main catalyst (M/C) or under-floor catalyst (U/F). The catalyst 6 will be hereinafter referred to as the downstream catalyst 6.

Each of the catalysts 5 and 6 is, for example, a three-way catalyst. The three-way catalyst exhibits a purification action of collectively converting carbon monoxide (CO), hydrocarbons (HC), and nitrogen oxides (NOx) into harmless components by chemical reactions.

The interior of the engine 1 (water jacket) is filled with a coolant liquid referred to as a long life coolant (LLC) (hereinafter referred to simply as the coolant). The coolant is temporarily removed through a coolant removal path 8 and supplied to a radiator 7, and is returned from the radiator 7 to the engine 1 via a coolant return path 9. The radiator 7 cools the coolant, which is circulated by a water pump 10, by heat exchange with the outside air.

A thermostat 11 regulates the rate of coolant flow through the radiator 7 and the rate of coolant flow through a bypass 12. For example, during the warm-up operation of the engine 1, the amount of coolant in the bypass 12 is increased to promote the warm-up.

A heater core 14 is disposed partway along a heater flow path 13 that branches from the coolant removal path 8 and is coupled to the coolant return path 9 upstream of the water pump 10. The heater core 14 is a heat source for heating the interior of a vehicle cabin using heat from the coolant. Air warmed by the heater core 14 is introduced into the vehicle cabin by a blower fan 15. The heater core 14 and the blower fan 15 constitute a heater unit 16. The heater flow path 13 includes an upstream flow path 13a that is upstream (upstream in the direction of flow of the coolant) of an exhaust heat recovery apparatus 20, which is described later, and a downstream flow path 13b that is downstream of the exhaust heat recovery apparatus 20. During an exhaust heat recovery operation of the exhaust heat recovery apparatus 20 (the exhaust heat recovery operation is detailed later), the temperature of the coolant flowing in the downstream flow path 13b is higher than the temperature of the coolant flowing in the upstream flow path 13a.

□ Configuration of the Exhaust Heat Recovery Apparatus□

The exhaust system of the engine I as described above is equipped with an exhaust heat recovery apparatus 20.

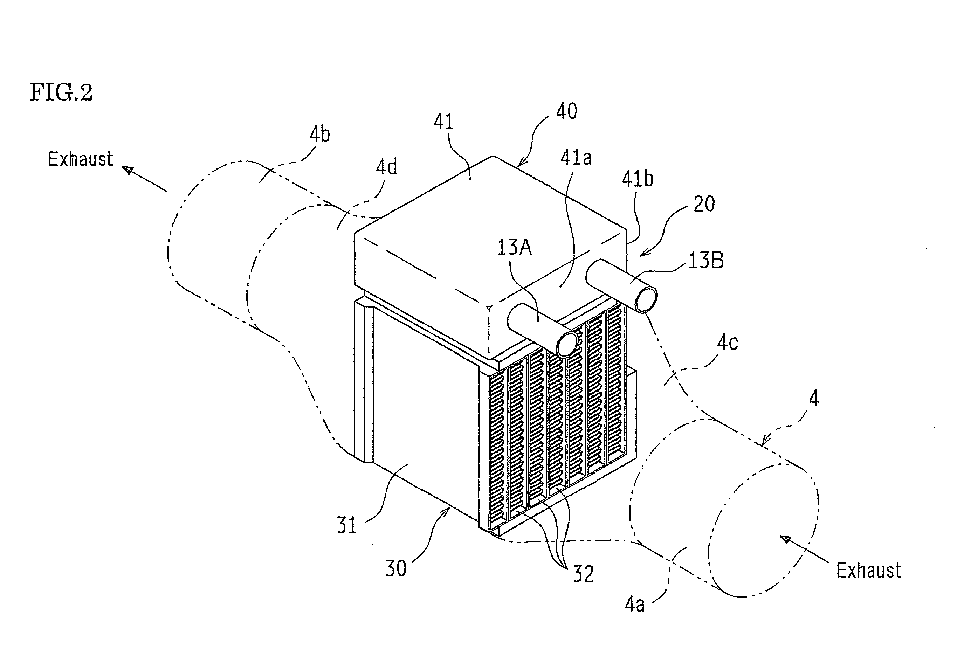

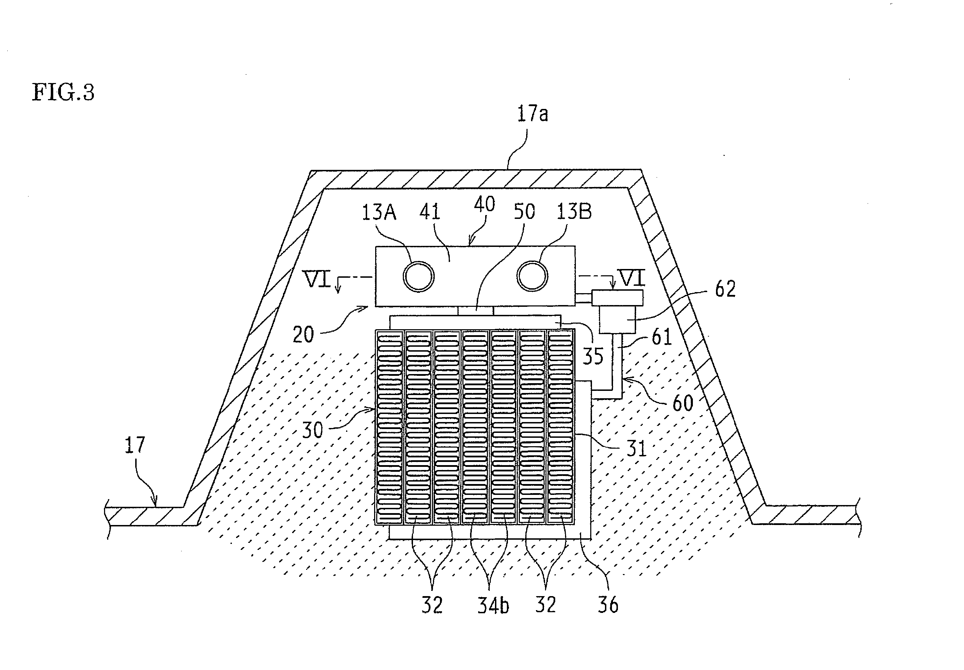

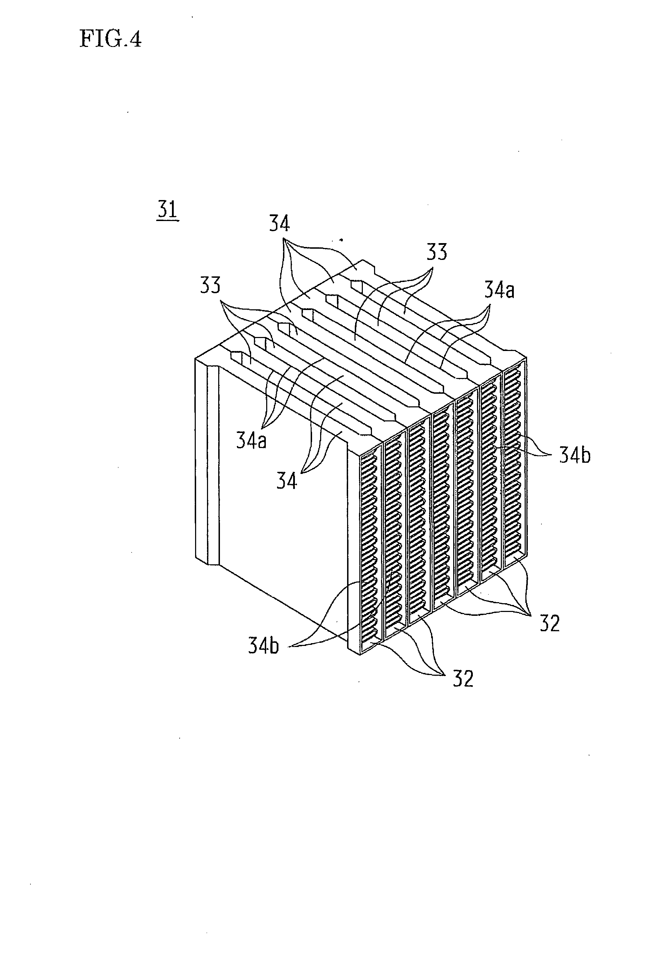

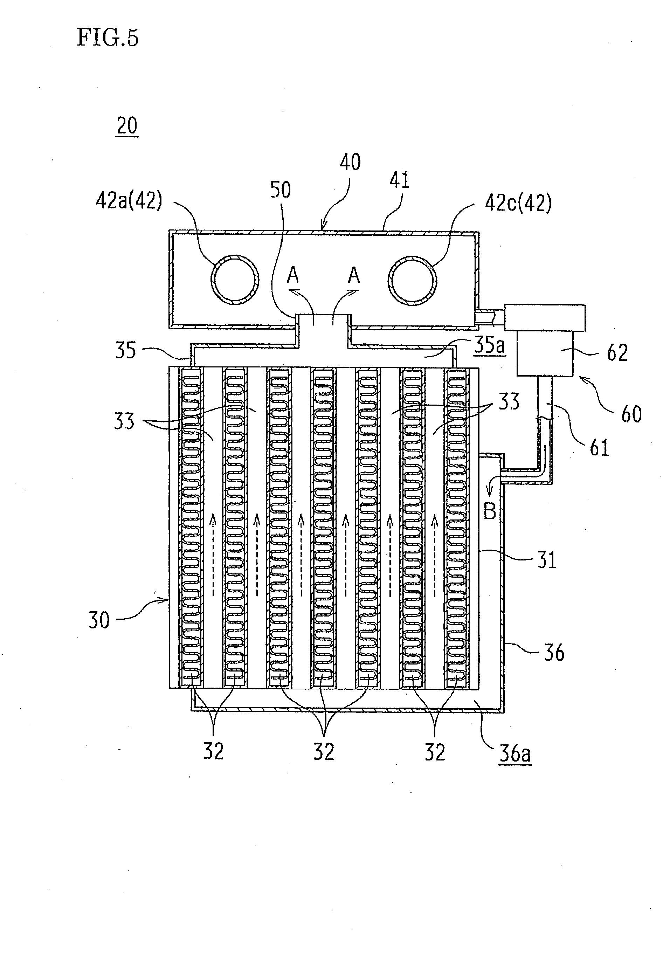

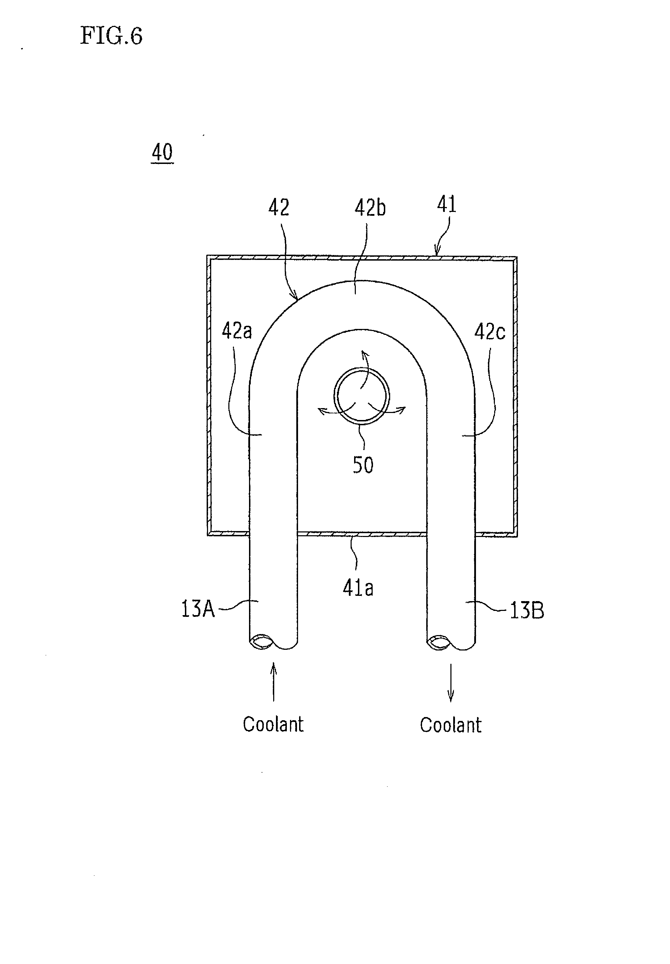

FIG. 2 is a perspective view of the exhaust heat recovery apparatus 20 illustrating a manner of its installment. FIG. 3 is a view, seen from the front of the vehicle, of the exhaust heat recovery apparatus 20 illustrating a manner of its installment. FIG 4 is a perspective view of a core 31 housed in the exhaust heat recovery apparatus 20. FIG. 5 is a cross-sectional view of the exhaust heat recovery apparatus 20, seen from the front of the vehicle. FIG. 6 is a cross-sectional view taken along the line VI-VI of FIG. 3.

This exhaust heat recovery apparatus 20 recovers heat from exhaust gas discharged from the engine 1 to promote temperature rising of the coolant. The exhaust heat recovery apparatus 20 primarily includes a heat recovering unit (heat receiving unit) 30 and a condensing unit (heat releasing unit) 40. The exhaust heat recovery apparatus 20 has the heat recovering unit 30 and the condensing unit 40 coupled to one another via a vapor supply pipe (fluid supply pipe) 50 and a condensed water return unit (return path) 60 (see FIG. 3 and FIG. 5).

Specifically, the condensing unit 40 is disposed above the heat recovering unit 30. The top portion of the heat recovering unit 30 is coupled to the bottom portion of the condensing unit 40 through the vapor supply pipe 50, while a side of the heat recovering unit 30 is coupled to a side of the condensing unit 40 through the condensed water return unit 60. This results in a looped heat pipe structure in which the heat medium (fluid) circulates through the heat recovering unit 30, the vapor supply pipe 50, the condensing unit 40 and the condensed water return unit 60, in this order.

As used herein, the exhaust heat recovery apparatus 20 of the above-described looped heat pipe structure denotes an apparatus that circulates a heat medium between the heat recovering unit 30 and the condensing unit 40 with phase transitions (phase transitions between the liquid phase and the gas phase), and thus repeats recovery of exhaust heat in the heat recovering unit 30 and release of heat (release of heat to the coolant) in the condensing unit 40.

The interior of the heat medium circulation route, which is formed by the heat recovering unit 30, the vapor supply pipe 50, the condensing unit 40, and the condensed water return unit 60, is under vacuum, and a suitable amount of the heat medium is sealed within the circulation route. The heat medium may be pure water, for example. The boiling point of water at 1 atm is 100°C. The reduction in pressure (for example, pressure reduction to 0.01 atm) in the heat medium circulation route makes the boiling point of the water, for example, 5 to 10°C within the circulation route. It is noted that the heat medium may be other than pure water, examples including alcohol, fluorocarbons, and Freon. Also, the main components of the exhaust heat recovery apparatus 20 are, for example, made of stainless materials, which are highly corrosion resistant.

As an overview of the constituent members of the exhaust heat recovery apparatus 20, the heat recovering unit 30 vaporizes a liquid phase heat medium sealed therein with heat from exhaust gas. The heat recovering unit 30 uses a single core 31. As shown in FIG 4 and FIG. 5, the core 31 includes a plurality of exhaust gas passages 32 and a plurality of heat medium passages 3.3, which are disposed in an alternating adjacent manner. The heat recovering unit 30 is configured to perform heat exchange between exhaust gas flowing through the exhaust gas passages 32 and a heat medium flowing through the heat medium passages 33. A specific configuration of the heat recovering unit 30 will be described later.

The condensing unit 40 receives the heat medium in gas phase vaporized in the heat recovering unit 30 and heats a heating target coolant with the latent heat and sensible heat of the heat medium. The gas phase heat medium in the condensing unit 40 is condensed into liquid phase in conjunction with the exchange of heat with the coolant, and is returned to the heat recovering unit 30 via the condensed water return unit 60. A specific configuration of the condensing unit 40 will be described later.

□Arrangement of the Exhaust Heat Recovery Apparatus 20□

Next, the arrangement of the exhaust heat recovery apparatus 20 is described.

As shown in FIG. 1 and FIG 2, the exhaust heat recovery apparatus 20 has the heat recovering unit 30 disposed partway along the exhaust pipe 4 so that the heat of exhaust gas flowing into the heat recovering unit 30 via the exhaust pipe 4 is recovered by the heat medium in the heat recovering unit 30.

The exhaust pipe 4, along which the exhaust heat recovery apparatus 20 is disposed, is divided into an upstream portion 4a and a downstream portion 4b at the exhaust heat recovery apparatus 20.

The inlets of the exhaust gas passages 32 of the heat recovering unit 30 are disposed on the upstream portion 4a side of the exhaust pipe 4, while the outlets of the exhaust gas passages 32 are disposed on the downstream portion 4b side of the exhaust pipe 4.

Tapered cone-shaped junction pipes 4c and 4d are disposed respectively in the connecting part between the exhaust gas inlet side of the heat recovering unit 30 and the upstream portion 4a of the exhaust pipe 4, and in the connecting part between the exhaust gas outlet side of the heat recovering unit 30 and the downstream portion 4b of the exhaust pipe 4.

The junction pipe 4c, which is disposed in the upstream connecting part, has such a shape that the internal diameter gradually increases from the upstream side to the downstream side in the direction of exhaust gas flow. This ensures that the exhaust gas flowing through the upstream portion 4a of the exhaust pipe 4 reaches the entire exhaust gas inlet region of the heat recovering unit 30 of the exhaust heat recovery apparatus 20.

The junction pipe 4d, which is disposed in the downstream connecting part, has such a shape that the internal diameter gradually decreases from the upstream side to the downstream side in the direction of exhaust gas flow. This ensures that the exhaust gas flowing out from the entire exhaust gas outlet region of the heat recovering unit 30 of the exhaust heat recovery apparatus 20 flows together into the downstream portion 4b of the exhaust pipe 4 while reducing flow resistance.

Also, the exhaust pipe 4 is housed in a tunnel portion 17a that is formed in the floor panel of the vehicle body (vehicle floor) 17 and extends in the front/back direction of the vehicle body. Consequently, as shown in FIG. 3, the heat recovering unit 30, which is disposed between the junction pipes 4c and 4d, and the condensing unit 40. which is disposed above the heat recovering unit 30, are both housed in the tunnel portion 17a (in the space below the floor panel 17).

With the exhaust heat recovery apparatus 20 disposed in this manner, the running wind flowing into the tunnel portion 17a of the floor panel 17 when the vehicle is running will flow along the bottom face and the side faces of the heat recovering unit 30 (in FIG. 3, the region where the running wind flows in a relatively large amount is shaded with dashed lines). That is, substantially no running wind flows along the top face and the side faces of the condensing unit 40, which causes substantially no loss of heat from the condensing unit 40 due to the running wind. As shown in FIG. 3, a comparatively small amount of running wind flows in the region occupying the approximately upper one-half of the space within the tunnel portion 17a. For this reason, the condensing unit 40 is preferably disposed with its lower end positioned higher than the vertical center of the space within the tunnel portion 17a.

□Configuration of the Heat Recovering Unit 30□

Next, the configuration of the heat recovering unit 30 will be described in detail.

As shown in FIG. 4, in the heat recovering unit 30, the core 31, which includes the exhaust gas passages 32 and the heat medium passages 33, constitutes a layered structure in which a suitable number of tubes 34, 34,... are layered and coupled in the crosswise direction (vehicle width direction). The mutual coupling of the tubes 34 is implemented by joining the layered parts by welding, brazing, or the like.

In this embodiment, the tubes 34 each have an approximately rectangular parallelepiped shape, and the spaces defined in the tubes 34 constitute the exhaust gas passages 32.

Recesses 34a, 34a extending throughout the vertical direction are disposed in midway regions (midway regions in the direction of flow of the exhaust gas) of both sidewalls of the tubes 34. The tubes 34 are layered and coupled together such that their both end portions in the direction of flow of the exhaust gas, where no recesses 34a, 34a are provided, are jointed together. This results in vertically extending spaces defined between the mutually facing recesses 34a, 34a. These spaces constitute the heat medium passages 33 through which the heat medium flows.

Also, fins 34b serving as heat receiving bodies that receive the heat of the exhaust gas are disposed in the exhaust gas passages 32, which are the inner spaces of the tubes 34. The fins 34b are, for example, of the commonly known corrugated type.

Thus, a multiplicity of exhaust gas passages 32 and heat medium passages 33 are disposed in an alternating adjacent manner. In this embodiment, the exhaust gas passages 32 are formed as lateral holes along the direction of flow of the exhaust gas, while the heat medium passages 33 are formed as vertical holes along the vertical direction, which is orthogonal to the direction of flow of the exhaust gas.

Above the core 31 thus configured, an upper case 35 is mounted (see FIG. 5). The upper case 35 defines a sending confluence space 35a that collects the gas phase heat medium vaporized in the heat medium passages 33 and sends the heat medium toward the condensing unit 40. The upper case 35 is provided above the core 31 so as to cover the top openings of all of the heat medium passages 33, 33,... . This ensures that the gas phase heat medium vaporized in all of the heat medium passages 33, 33,... of the core 31 is collected in the confluence space 35a. As a result, the gas phase heat medium collected in the confluence space 35a is supplied to the condensing unit 40 via the vapor supply pipe 50.

Also, at the bottom and the sides of this core 31, a lower case 36 is mounted. The lower case 36 defines a recovery space 36a through which the water condensed in the condensing unit 40 is recovered. The lower case 36 is provided below the core 31 so as to cover the bottom openings of all of the heat medium passages 33, 33,... . This ensures that the liquid phase heat medium received from the condensing unit 40 flows into the recovery space 36a and is distributed to all the heat medium passages 33, 33,... of the core 31.

□Vapor Supply Pipe 50□

The vapor supply pipe 50 has an axis extending in the vertical direction, and couples the top (top wall) of the heat recovering unit 30 to the bottom (bottom wall) of the condensing unit 40, thus allowing mutual communication between the inner space of the heat recovering unit 30 (the heat medium passages 33, 33,... and the confluence space 35a) and the inner space of the condensing unit 40. More specifically, the center of the top face of the heat recovering unit 30 is coupled to the center of the bottom face of the condensing unit 40.

Furthermore, the upper end of the vapor supply pipe 50 passes through the bottom wall of the condensing unit 40 to extend into the inner space of the condensing unit 40. On the upper end of the vapor supply pipe 50, an opening is provided so as to release the vapor into the inner space of the condensing unit 40. The upper end of the vapor supply pipe 50 (the position of the opening) is at a relatively low position in the inner space of the condensing unit 40. That is, when the heat medium vaporized in the heat recovering unit 30 is supplied to the inner space of the condensing unit 40 via the vapor supply pipe 50, the heat medium (vapor) spreads out horizontally at a relatively low position in the inner space of the condensing unit 40. In other words, the upward guidance of the heat medium by the vapor supply pipe 50 is discontinued at a relatively low position in the inner space of the condensing unit 40, thereby allowing the heat medium (vapor) to spread out horizontally (see the arrows A in FIG. 5). This ensures a configuration that makes unlikely the situation in which most of the heat medium introduced into the inner space of the condensing unit 40 through the vapor supply pipe 50 is blown directly against the upper surface of the condensing unit 40.

Specifically, the upper end of the vapor supply pipe 50 is set at a height position that is the same as the lower end height of the outer surface of an LLC pipe 42, described later, or that is lower than the bottom end height of the outer surface of the LLC pipe 42.

□Configuration of the Condensing Unit 40□

Next, the configuration of the condensing unit 40 will be described in detail.

The condensing unit 40 includes a hollow casing 41 that has an approximately rectangular parallelepiped shape, and an LLC pipe (heating target flow path pipe) 42 that is disposed at the interior of the casing 41.

The casing 41 has a flat shape such that its plan view shape approximately matches the plan view shape of the heat recovering unit 30, while the height dimension of the casing 41 is approximately one quarter of the height dimension of the heat recovering unit 30. Also, the inner space of the casing 41 is a heat medium expansion space into which the heat medium (vapor) supplied by the vapor supply pipe 50 is introduced and spreads out horizontally.

Next, the LLC pipe 42, which is disposed within the casing 41, has a shape that bends so as to surround the opening position of the vapor supply pipe 50 (a central position on the bottom surface of the condensing unit 40).

Specifically, as shown in FIG. 6 (the cross-sectional view taken along the line VI - VI of FIG. 3), the upstream end and the downstream end of the LLC pipe 42 pass through a sidewall 41a, among the side walls of the casing 41, that is on the front side of the vehicle. The LLC pipe 42 is made up of a inlet pipe portion (first pipe portion) 42a, a bent pipe portion 42b, and a outlet pipe portion (second pipe portion) 42c, which are continuous with respect to each other.

The inlet pipe portion 42a is a straight pipe portion that is continuous on an upstream pipe 13A forming the upstream flow path 13a of the heater flow path 13, and that passes through the sidewall 41a of the casing 41, which is on the front side of the vehicle. The outlet pipe portion 42c is a straight pipe portion that is continuous on a downstream pipe 13B forming the downstream flow path 13b of the heater flow path 13, and that passes through the sidewall 14a of the casing 41, which is on the front side of the vehicle. The bent pipe portion 42b is a bent (curved) pipe portion that couples the downstream end of the inlet pipe portion 42a to the upstream end of the outlet pipe portion 42c, within the casing 41 of the condensing unit 40. Furthermore, the respective axes of the inlet pipe portion 42a, the bent pipe portion 42b, and the outlet pipe portion 42c are each set at a height position that is approximately the vertical center within the casing 41. That is, these pipe portions 42a, 42b, and 42c are disposed on a common imaginary horizontal plane.

With such a configuration, when the coolant flows into the LLC pipe 42 from the upstream flow path 13a of the heater flow path 13, the coolant flows successively through the inlet pipe portion 42a, the bent pipe portion 42b, and the outlet pipe portion 42c, and then flows out into the downstream flow path 13b of the heater flow path 13. Thus, while the coolant is flowing within the LLC pipe 42, the coolant is heated through heat exchange with the heat medium (vapor) that is introduced into the casing 41 of the condensing unit 40.

With such a configuration, as shown in FIG. 6, the inlet pipe portion 42a, the outlet pipe portion 42c, and the bent pipe portion 42b are positioned in three directions (to the left and the right, and to the top, in FIG. 6; that is, the rightward direction, the leftward direction, and the rearward direction of the vehicle) with respect to the downstream end of the vapor supply pipe 50, within the condensing unit 40. That is, the LLC pipe 42 is disposed so as to surround the periphery of the downstream end of the vapor supply pipe 50. Accordingly, the opening of the vapor supply pipe 50 is positioned to supply the vapor to the space surrounded by the inlet pipe portion 42a, the bent pipe portion 42b, and the outlet pipe portion 42c. This ensures that the heat medium flowing into the casing 41 from the downstream end of the vapor supply pipe 50 flows directly toward the inlet pipe portion 42a, the outlet pipe portion 42c, and the bent pipe portion 42b (before reaching the inner walls (side surfaces) of the casing 41).

□Condensed Water Return Unit 60□

As shown in FIG. 5, the condensed water return unit 60 includes a return pipe 61 that couples a sidewall of the condensing unit 40 to a sidewall (lower case 36) of the heat recovering unit .30, and an open/close valve 62 disposed partway along the return pipe 61. During an exhaust heat recovery operation, the open/close valve 62 is opened to allow the heat medium to be recovered from the condensing unit 40 to the heat recovering unit 30. Thus, the heat medium circulates through the heat recovering unit 30, the vapor supply pipe 50, the condensing unit 40, and the condensed water return unit 60. Meanwhile, for example, when the coolant temperature reaches a predetermined temperature at which an exhaust heat recovery operation is no longer necessary, then the open/close valve 62 is closed to prevent recovery of the heat medium from the condensing unit 40 to the heat recovering unit 30, thereby discontinuing the circulation of the heat medium described above. The open/close valve 62 may be an electromagnetic open/close valve, or may be a thermostat, which carries out its opening and closing operations in accordance with changes in temperature.

□Operation of the Exhaust Heat Recovery Apparatus 20□

Next, the operation of the exhaust heat recovery apparatus 20 will be described.

At the time of cold start of the engine 1, the upstream catalyst 5, the downstream catalyst 6, and the coolant in the engine 1 are all at a low temperature (approximately the temperature of the outside air) Accordingly, when the engine is started in this state, the engine I discharges exhaust gas of, for example, 300 to 400°C into the exhaust pipe 4 via the exhaust manifold 2, and the two catalysts 5 and 6 are warmed by the exhaust gas. Also, a warm-up operation is carried out when the coolant returns to the engine 1 via the bypass 12, without passing through the radiator 7.

During the warm-up operation, the exhaust gas flowing in the exhaust pipe 4 flows into and passes through the exhaust gas passages 32, 32,... of the core 31 of the heat recovering unit 30. In the course of passing through the exhaust gas passages 32, the exhaust gas flows to the downstream side while contacting the outer surfaces of the fins 34b in the exhaust gas passages 32. This transfers the heat of the exhaust gas to the fins 34b.

Meanwhile, the liquid phase heat medium accumulated in the recovery space 36a and the heat medium passages 33, 33,... of the heat recovering unit 30 receives the heat of the exhaust gas flowing through the exhaust gas passages 32, 32,... within all of the heat medium passages 33, 33,... of the core 31, and is thus heated and vaporized.

The vaporized gas phase heat medium rises within all of the heat medium passages 33, 33,... (see the arrows indicated with broken lines in FIG. 5) and is confluent in the confluence space 35a and introduced into the condensing unit 40 via the vapor supply pipe 50 (see the arrows A in FIG. 5).

In the condensing unit 40, the coolant flowing within the LLC pipe 42 is heated by the latent heat and sensible heat of the gas phase heat medium. Consequently, the gas phase heat medium in the condensing unit 40 condenses into liquid phase, and is returned to the recovery space 36a in the heat recovering unit 30 via the condensed water return unit 60 (see arrow B in FIG. 5). During the warm-up operation, the open/close valve 62 is in open state so that the liquid phase heat medium returned to the recovery space 36a of the heat recovering unit 30 once again receives the heat of the exhaust gas flowing in the exhaust gas passages 32, 32,..., and is thus vaporized and introduced into the condensing unit 40. This heat medium circulation operation is repeated during the warm-up operation.

Thus, the heat medium circulates in the closed loop formed by the heat recovering unit 30, the vapor supply pipe 50, the condensing unit 40, and the condensed water return unit 60 with phase transitions, thereby repeating recovery of the exhaust gas heat and heating of the coolant. This ensures early termination of the warm-up operation of the engine 1, resulting in an improved fuel consumption rate.

At the termination of the warm-up operation, which is when the heat exchange with the coolant in the condensing unit 40 is no longer necessary, the open/close valve 62 is closed to prevent recovery of the heat medium from the condensing unit 40 to the heat recovering unit 30, thus discontinuing the circulation of the heat medium described above.

A feature of the operation of this embodiment is the heat exchange operation in the condensing unit 40. Specifically, as described above, at the interior of the condensing unit 40, the inlet pipe portion 42a, the outlet pipe portion 42c, and the bent pipe portion 42b are positioned in three directions (to the left and the right, and to the top, in FIG. 6) with respect to the downstream end (upper end) of the vapor supply pipe 50. Also, the upper end of the vapor supply pipe 50 is set at a relatively low position in the inner space of the condensing unit 40 to ensure that the heat medium (vapor) spreads out horizontally at a relatively low position in the inner space of the condensing unit 40.

This ensures that most of the heat medium introduced into the inner space of the condensing unit 40 spreads out horizontally and is blown directly against the inlet pipe portion 42a, the outlet pipe portion 42c, and the bent pipe portion 42b, before being blown toward the inner surfaces (side surfaces) of the condensing unit 40. Consequently, while limiting the amount of release of heat of the gas phase heat medium from the walls of the casing 41 of the condensing unit 40, the majority of the heat contributes to heating the coolant via the LLC pipe 42.

Also, the coolant flows within the LLC pipe 42 in the inner space of the condensing unit 40, which causes substantially no release of the heat received by the coolant through the walls of the casing 41 of the condensing unit 40. As a result, the coolant flows out from the condensing unit 40 to the downstream flow path 13b of the heater flow path 13 while maintaining approximately all of the heat received from the gas phase heat medium.

This greatly reduces the amount of external release of heat both for the gas phase heat medium and the coolant, and facilitates the attempt to improve the exhaust heat recovery efficiency. Further in this embodiment, the advantageous effects described above are achieved by changing the manner of disposing the vapor supply pipe 50 and the LLC pipe 42, which facilitates the attempt to reduce costs and the weight of the exhaust heat recovery apparatus 20.

Further in this embodiment, disposing the condensing unit 40 directly above the heat recovering unit 30 ensures setting a shortened length dimension of the vapor supply pipe 50, which couples the heat recovering unit 30 to the condensing unit 40. This limits the amount of release of heat through the surface of the vapor supply pipe 50, ensuring that most of the heat obtained in the heat recovering unit .30 is supplied to the condensing unit 40. This facilitates the attempt to improve the efficiency of the heat exchange in the condensing unit 40.

Moreover, in this embodiment, the inlet pipe portion 42a, the outlet pipe portion 42c, and the bent pipe portion 42b are positioned between the side surfaces of the casing 41 and the opening position of the vapor supply pipe 50, in a plan view (seen in the horizontal plane) of the condensing unit 40. That is, the LLC pipe 42 is not positioned above the opening of the vapor supply pipe 50. This ensures that, even if the liquid phase heat medium condensed through the heat exchange in the condensing unit 40 drips down from the LLC pipe 42 under the medium's own weight, the liquid phase heat medium will not return to the heat recovering unit 30 via the vapor supply pipe 50. That is, the liquid phase heat medium will securely return to the heat recovering unit 30 via the condensed water return unit 60. This eliminates backflow in the circulation of the heat medium and ensures smooth circulation operations, achieving efficient heat recovery.

Furthermore, as described above, the exhaust heat recovery apparatus 20 is housed in the tunnel portion 17a of the floor panel 17, and the condensing unit 40 is disposed above the heat recovering unit 30. This ensures that the running wind flowing into the tunnel portion 17a of the floor panel 17 when the vehicle is running will flow along the bottom face and the side faces of the heat recovering unit 30 (see the region shaded with broken lines in FIG. 3). That is, substantially no running wind flows along the top face and the side faces of the condensing unit 40, which causes substantially no loss of heat from the condensing unit 40 due to the running wind. This will be described in detail below.

The amount of heat transfer in the region of the exhaust heat recovery apparatus 20 exposed to the running wind is represented by the following Equation (1)

[Equation 1]

$$Q = hA(T_s - T_f) \cdots (1)$$

Q : heat trans fer    h : film heat trans fer coefficien t    A : area

Ts : recovery apparatus wall surface temperatu re    Tf : fluid temperature

It is noted that the film heat transfer coefficient is a value determined by the state of the fluid, and in developed turbulent forced convection heat transfer on a flat plate, is represented as follows.

[Equation 2]

$$N_u = \frac{hd}{k} \begin{bmatrix} \text{Nu : Nusselt number} \\ \text{d : film thickness} \\ \text{k : thermal conductivity} \end{bmatrix}$$

[Equation 3]

$$Nu = 0.036\,\mathrm{Re}^{0.8}\,\mathrm{Pr}^{\frac{1}{3}} \quad \begin{bmatrix} \mathrm{Re:Reynolds\ number} \\ \mathrm{Pr:Prandtl\ number} \end{bmatrix}$$

[Equation 4]

$$\mathrm{Re} = \frac{\rho u D}{\mu} \quad \begin{bmatrix} \rho : \mathrm{density} \\ u : \mathrm{flow\ rate} \\ D : \mathrm{pipe\ diameter} \\ \mu : \mathrm{viscosity} \end{bmatrix}$$

Thus, no forced convection heat transfer occurs in the region not exposed to running wind, and the region exposed to running wind (the bottom face and side faces of the heat recovering unit 30) dominates in terms of heat release, resulting in substantially no loss of heat from the condensing unit 40.

This greatly reduces the amount of external release of heat from the condensing unit 40 (the amount of heat lost due to running wind), and facilitates the attempt to improve the exhaust heat recovery efficiency. Also, the LLC pipe 42 is disposed within the casing 41 of the condensing unit 40, which eliminates the possibility of loss of the heat of the coolant flowing in the LLC pipe 42 due to the running wind.

Furthermore, since the LLC pipe 42 is not exposed to the outside environment, there is no need to consider salt corrosion and like matters. In particular, if the coolant leaks due to salt corrosion or like matters of the LLC pipe 42, the engine 1 must be stopped so as to avoid overheating. In this embodiment, it is not necessary to consider salt corrosion and like matters. This provides a widened range of constituent materials that can be used for the LLC pipe 42, allowing selection of relatively low-cost materials and selection of materials having high heat exchange efficiency (materials having high thermal conductivity).

□Modifications□

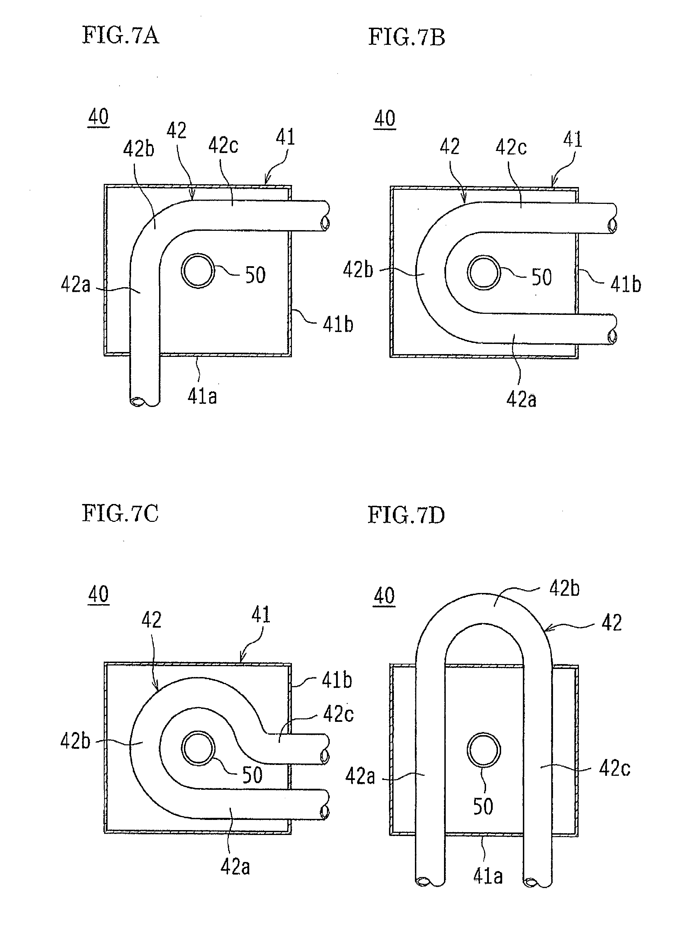

Next, modifications of the present invention are described by referring to FIG 7A to FIG. 7D. The following are modifications of the manner in which the LLC pipe 42 is disposed in the condensing unit 40.

In the configuration shown in FIG. 7A, the inlet pipe portion 42a of the LLC pipe 42 passes through the sidewall 41a, which is to the front of the vehicle, of the casing 41 of the condensing unit 40, and connects to the outlet pipe portion 42c via the bent pipe portion 42b that is bent at approximately 90° (the angle by which the direction of extension of the axis changes is 90°). The outlet pipe portion 42c passes through the sidewall 41b, which is to a side of the vehicle, of the casing 41 of the condensing unit 40, That is, the inlet pipe portion 42a, the bent pipe portion 42b, and the outlet pipe portion 42c are positioned to the left through the top of the downstream end of the vapor supply pipe 50 in FIG, 7A.

In the configuration shown in FIG 7B, the inlet pipe portion 42a of the LLC pipe 42 passes through the sidewall 41b, which is to a side of the vehicle, of the casing 41 of the condensing unit 40, and connects to the outlet pipe portion 42c via the bent pipe portion 42b that is bent at approximately 180°. The outlet pipe portion 42c passes through the sidewall 41b, which is to a side of the vehicle, of the casing 41 of the condensing unit 40. That is, the inlet pipe portion 42a, the bent pipe portion 42b, and the outlet pipe portion 42c are positioned to the left, the top, and the bottom of the downstream end of the vapor supply pipe 50 in FIG. 7B.

In the configuration shown in FIG. 7C, the inlet pipe portion 42a of the LLC pipe 42 passes through the sidewall 41b, which is to a side of the vehicle, of the casing 41 of the condensing unit 40, and connects to the outlet pipe portion 42c via the bent pipe portion 42b that is bent at approximately 270°. The outlet pipe portion 42c passes through the sidewall 41b, which is to a side of the vehicle, of the casing 41 of the condensing unit 40.

In the configuration shown in FIG. 7D, the inlet pipe portion 42a of the LLC pipe 42 passes through the sidewall 41a, which is to the front of the vehicle, of the casing 41 of the condensing unit 40, and connects to the outlet pipe portion 42c via the bent pipe portion 42b that is disposed at the exterior of the casing 41 of the condensing unit 40 and that is bent at approximately 180°. The outlet pipe portion 42c passes through the sidewall 41a, which is to the front of the vehicle, of the casing 41 of the condensing unit 40. That is, the inlet pipe portion 42a and the outlet pipe portion 42c are positioned to the left and the right of the downstream end of the vapor supply pipe 50 in FIG. 7D. In the configuration shown in FIG. 7D, the bent pipe portion 42b is exposed to the external environment. This necessitates use of, as the constituent material for such bent pipe portion 42b, a material considering salt corrosion and like matters (examples including stainless steel).

It is preferred that in a plan view, the LLC pipe 42 be present on at least three of the four perpendiculars that extend to the four side faces of the casing 41 from the center of the vapor supply pipe 50, as shown in FIG. 6, FIG. 7B and FIG. 7C. This increases the ratio of the steam that is blown directly against the outer surface of the LLC pipe 42 to the steam supplied from the vapor supply pipe 50 to the inner space of the casing 41. This, as a result, facilitates the attempt to further improve the heat recovery efficiency.

□Other Embodiments□

In the embodiment and the modifications described above, the exhaust heat recovery apparatus 20 is disposed in a gasoline engine. This, however, should not be construed as limiting the present invention, and the exhaust heat recovery apparatus 20 may be disposed in a diesel engine. In this case, examples of the catalyst apparatus, used include a DPF (Diesel Particulate Filter) and a DPNR (Diesel Particulate-NOx Reduction system).

It is also possible to use an NOx storage reduction (NSR) catalyst for the upstream catalyst 5 and a selective catalytic reduction (SCR) catalyst for the downstream catalyst 6.

The present invention can also be applied to hybrid vehicles, which use an internal combustion engine and an electrical motor jointly as power sources. In hybrid vehicle applications, a warm-up operation at the time of cold starting completes (the engine stops upon completion of a warm-up operation) in a short period of time, thus reducing fuel consumption.

Furthermore, in the embodiment and modifications described above, the bent pipe portion 42b is disposed at only one position in the LLC pipe 42. Alternatively, it is possible to use an LLC pipe that is bent at a plurality of positions. Furthermore, there is no particular limitation to the form of bending of the bent pipe portion 42b. The bending angle of the bent pipe portion 42b (angle of change in the direction of extension of the axis of the bent pipe portion 42b) may be an acute, right, or obtuse angle.

**Industrial Applicability**

The present invention can be applied to exhaust heat recovery apparatuses installed in automobile engines to promote the increase in temperature of a coolant by recovering the heat of exhaust gas.

**Reference Signs List**

1       Engine (internal combustion engine)
17      Floor panel (vehicle floor)
17a     Tunnel portion
20      Exhaust heat recovery apparatus
30      Heat recovering unit (heat receiving unit)
40      Condensing unit (heat releasing unit)
41      Casing
42      LLC pipe (heating target flow path pipe)
42a     Inlet pipe portion (first pipe portion)
42b     Bent pipe portion (bent pipe portion)
42c     Outlet pipe portion (second pipe portion)
50      Vapor supply pipe (fluid supply pipe)
60      Condensed water return unit (return path)

**Claims**

1. An exhaust heat recovery apparatus (20) comprising: a heat receiving unit (30) configured to heat and vaporize a fluid with heat from exhaust gas; a heat releasing unit (40) configured to receive the fluid in gas phase vaporized in the heat receiving unit (30) and to heat a heating target fluid with the gas phase fluid; a fluid supply pipe (50) through which the gas phase fluid vaporized in the heat receiving unit (30) is supplied to an inner space of the heat releasing unit (40), and a return path (60) through which the fluid in liquid phase condensed in the heat releasing unit (40) is returned to the heat receiving unit (30),
wherein the heat releasing unit (40) comprises a heating target flow path pipe (42) disposed in the inner space of the heat releasing unit (40), and
wherein the fluid supply pipe (50) comprises an opening in the inner space of the heat releasing unit (40),
**characterized in that**
the fluid supply pipe (50) is separated from the return path (60) so that the fluid heated by the heat from the exhaust gas is circulated sequentially via the heat receiving unit (30), the fluid supply pipe (50) the heat releasing unit (40) and then the return path (60),
the heating target flow path pipe (42) comprising: a first pipe portion (42a) constituting an inflow route for the heating target fluid into the inner space of the heat releasing unit (40); and a second pipe portion (42c) coupled to the first pipe portion (42a) via a bent pipe portion (42b) that is bent in the inner space or at an exterior of the inner space, the second pipe portion (42c) constituting an outflow route for the heating target fluid from the inner space, and
wherein the opening is positioned at the centre of the heat releasing unit (40) in a plane view of the heat releasing unit (40) and the first pipe portion (42a), and the second pipe portion (42c) are positioned between the fluid supply pipe (50) and side surfaces of a casing (41) of the heat releasing unit (40) in a plane view of the heat releasing unit (40).

2. The exhaust heat recovery apparatus according to claim 1, wherein the bent pipe portion (42b) is disposed in the inner space of the heat releasing unit (40) to couple the first pipe portion (42a) to the second pipe portion (42c), and wherein the opening of the fluid supply pipe (50) is positioned to supply the gas phase fluid to a space surrounded by the first pipe portion (42a), the bent pipe portion (42b) and the second pipe portion (42c).

3. The exhaust heat recovery apparatus according to claim 1 or 2, wherein the heat releasing unit (40) is disposed directly above the heat receiving unit (30), and wherein the fluid supply pipe (50) couples a top portion of the heat receiving unit (30) to a bottom portion of the heat releasing unit (40) to allow mutual communication between an inner space of the heat receiving unit (30) and the inner space of the heat releasing unit (40).

4. The exhaust heat recovery apparatus according to claim 3, wherein the first pipe portion (42a) and the second pipe portion (42c) are positioned between the fluid supply pipe (50) and side surfaces of a casing (41) of the heat releasing unit (40), in a plan view of the heat releasing unit (40).

5. The exhaust heat recovery apparatus according to claim 3, or 4, wherein the fluid supply pipe (50) has an upper end in the inner space of the heat releasing unit (40) at a height position that is same as a lower end height of each of the first pipe portion (42a) and the second pipe portion (42c), or that is lower than the lower end height of each of the first pipe portion (42a) and the second pipe portion (42c).

6. The exhaust heat recovery apparatus according to any one of claims 3 to 5, wherein the first pipe portion (42a), the bent pipe portion (42b), and the second pipe portion (42c) are disposed on a common imaginary horizontal plane.

7. A vehicle comprising the exhaust heat recovery apparatus (20) according to any of claims 3-6, wherein the exhaust heat recovery apparatus (20) is configured to recover heat from exhaust gas discharged from an internal combustion engine (1) installed in the vehicle, and wherein the heat receiving unit (30) and the heat releasing unit (40) are housed in a space below a tunnel portion (17a) formed on a vehicle floor (17).

8. A vehicle according to claim 7 or a vehicle comprising the heat recovery apparatus according (20) to any of claims 3 to 6, wherein the first pipe portion (42a), the second pipe portion (42c), and the bent pipe portion (42b) are respectively positioned to a rightward of the vehicle, to a leftward of the vehicle, and to a frontward or rearward of the vehicle relative to the upper end of the fluid supply pipe (50).

**EP 2 472 208 B1**

**Patentansprüche**

1. Abgaswärmerückgewinnungsvorrichtung (20), mit einer Wärmeaufnahmeeinheit (30), die eingerichtet ist, um mit einer Abgaswärme ein Fluid zu erwärmen und zu verdampfen; einer Wärmeabgabeeinheit (40), die eingerichtet ist, das in der Wärmeaufnahmeeinheit (30) verdampfte Fluid in der Gasphase aufzunehmen und ein Zielheizfluid mit dem Gasphasenfluid zu erwärmen; einer Fluidzuführleitung (50), durch die das in der Wärmeaufnahmeeinheit (30) verdampfte Gasphasenfluid in einen Innenraum der Wärmeabgabeeinheit (40) zugeführt wird; sowie einem Rücklaufpfad (60), durch den das in der Wärmeabgabeeinheit (40) kondensierte Fluid in der Flüssigphase zu der Wärmeaufnahmeeinheit (30) zurückgeführt wird,

   wobei die Wärmeabgabeeinheit (40) ein in dem Innenraum der Wärmeabgabeeinheit (40) angeordnetes Heizungsziel-Durchlaufrohr (42) aufweist, und

   wobei die Fluidzuführleitung (50) eine Öffnung in dem Innenraum der Wärmeabgabeeinheit (40) hat,
   **dadurch gekennzeichnet, dass**
   die Fluidzuführleitung (50) von dem Rücklaufpfad (60) getrennt ist, so dass das durch die Wärme des Abgases erwärmte Fluid nacheinander durch die Wärmeaufnahmeeinheit (30), die Fluidzuführleitung (50), die Wärmeabgabeeinheit (40) und anschließend den Rücklaufpfad (60) zirkuliert wird,

   wobei das Heizungsziel-Durchlaufrohr (42) Folgendes aufweist: einen ersten Rohrabschnitt (42a), der einen Zuflussweg für das Zielheizfluid in den Innenraum der Wärmeabgabeeinheit (40) bildet; sowie einen zweiten Rohrabschnitt (42c), der mit dem ersten Rohrabschnitt (42a) über einen gekrümmten Rohrabschnitt (42b) verbunden ist, der in dem Innenraum oder außerhalb des Innenraums gekrümmt ist, wobei der zweite Rohrabschnitt (42c) einen Abflussweg für das Zielheizfluid aus dem Innenraum bildet, und

   wobei die Öffnung in der Draufsicht der Wärmeabgabeeinheit (40) in der Mitte der Wärmeabgabeeinheit (40) angeordnet ist und der erste Rohrabschnitt (42a) sowie der zweite Rohrabschnitt (42c) in der Draufsicht der Wärmeabgabeeinheit (40) zwischen der Fluidzuführleitung (50) und Seitenflächen eines Gehäuses (41) der Wärmeabgabeeinheit (40) angeordnet sind.

2. Abgaswärmerückgewinnungsvorrichtung nach Anspruch 1, wobei der gekrümmte Rohrabschnitt (42b) in dem Innenraum der Wärmeabgabeeinheit (40) angeordnet ist, um den ersten Rohrabschnitt (42a) mit dem zweiten Rohrabschnitt (42c) zu verbinden, und wobei die Öffnung der Fluidzuführleitung (50) angeordnet ist, um das Gasphasenfluid einem Raum zuzuführen, der durch den ersten Rohrabschnitt (42a), den gekrümmten Rohrabschnitt (42b) und den zweiten Rohrabschnitt (42c) umschlossen ist.

3. Abgaswärmerückgewinnungsvorrichtung nach Anspruch 1 oder 2, wobei die Wärmeabgabeeinheit (40) direkt über der Wärmeaufnahmeeinheit (30) angeordnet ist, und wobei die Wärmezuführleitung (50) einen oberen Abschnitt der Wärmeaufnahmeeinheit (30) mit einem Bodenabschnitt der Wärmeabgabeeinheit (40) verbindet, um eine gegenseitige Verbindung zwischen einem Innenraum der Wärmeaufnahmeeinheit (30) und dem Innenraum der Wärmeabgabeeinheit (40) zu ermöglichen.

4. Abgaswärmerückgewinnungsvorrichtung nach Anspruch 3, wobei der erste Rohrabschnitt (42a) und der zweite Rohrabschnitt (42c) in einer Draufsicht der Wärmeabgabeeinheit (40) zwischen der Fluidzuführleitung (50) und Seitenflächen eines Gehäuses (41) der Wärmeabgabeeinheit (40) angeordnet sind.

5. Abgaswärmerückgewinnungsvorrichtung nach Anspruch 3 oder 4, wobei ein oberes Ende der Fluidzuführleitung (50) in dem Innenraum der Wärmeabgabeeinheit (40) in einer Höhenposition angeordnet ist, die dieselbe ist wie eine Höhe des unteren Endes sowohl des ersten Rohrabschnitts (42a) als auch des zweiten Rohrabschnitts (42c) oder die tiefer ist als die Höhe des unteren Endes sowohl des ersten Rohrabschnitts (42a) als auch des zweiten Rohrabschnitts (42c).

6. Abgaswärmerückgewinnungsvorrichtung nach einem der Ansprüche 3 bis 5, wobei der erste Rohrabschnitt (42a), der gekrümmte Rohrabschnitt (42b) und der zweite Rohrabschnitt (42c) auf einer gemeinsamen gedachten Horizontalebene angeordnet sind.

7. Fahrzeug mit der Abgaswärmerückgewinnungsvorrichtung (20) nach einem der Ansprüche 3 bis 6, wobei die Abgaswärmerückgewinnungsvorrichtung (20) eingerichtet ist, um eine Wärme aus einem Abgas zurückzugewinnen, das aus einer in dem Fahrzeug installierten Brennkraftmaschine (1) ausgestoßen wird, und wobei die Wärmeaufnahmeeinheit (30) und die Wärmeabgabeeinheit (40) in einem Raum unterhalb eines an einem Fahrzeugboden (17) ausgebildeten Tunnelabschnitts (17a) enthalten sind.

8.  Fahrzeug nach Anspruch 7 oder ein Fahrzeug mit der Abgaswärmerückgewinnungsvorrichtung (20) nach einem der Ansprüche 3 bis 6, wobei der erste Rohrabschnitt (42a), der zweite Rohrabschnitt (42c) und der gekrümmte Rohrabschnitt (42b) entsprechend zu einer Rechten des Fahrzeugs, zu einer Linken des Fahrzeugs bzw. zu einer Front oder einem Heck des Fahrzeugs in Bezug auf das obere Ende der Fluidzuführleitung (50) angeordnet sind.

**Revendications**

1.  Dispositif de récupération de chaleur d'échappement (20) comprenant : une unité de réception de chaleur (30) configurée pour chauffer et vaporiser un fluide avec de la chaleur provenant des gaz d'échappement ; une unité de libération de chaleur (40) configurée pour recevoir le fluide en phase gazeuse vaporisée dans l'unité de réception de chaleur (30) et pour chauffer un fluide cible de chauffage avec le fluide en phase gazeuse ; un tuyau d'alimentation en fluide (50) par lequel le fluide en phase gazeuse vaporisé dans l'unité de réception de chaleur (30) est alimenté vers un espace intérieur de l'unité de libération de chaleur (40) ; et un chemin de retour (60) par lequel le fluide en phase liquide condensé dans l'unité de libération de chaleur (40) est ramené vers l'unité de réception de chaleur (30), dans lequel l'unité de libération de chaleur (40) comprend un tuyau de chemin d'écoulement de cible de chauffage (42) disposé dans l'espace intérieur de l'unité de libération de chaleur (40), et
    dans lequel le tuyau d'alimentation en fluide (50) comprend une ouverture dans l'espace intérieur de l'unité de libération de chaleur (40),
    **caractérisé en ce que**
    le tuyau d'alimentation en fluide (50) est séparé du chemin de retour (60) de telle manière que le fluide chauffé par la chaleur venant du gaz d'échappement est mis en circulation séquentiellement via l'unité de réception de chaleur (30), le tuyau d'alimentation en fluide (50), l'unité de libération de chaleur (40) et ensuite le chemin de retour (60), le tuyau de chemin d'écoulement de cible de chauffage (42) comprenant : une première partie de tuyau (42a) constituant un chemin d'entrée pour le fluide cible de chauffage dans l'espace intérieur de l'unité de libération de chaleur (40) ; et une seconde partie de tuyau (42c) couplée à la première partie de tuyau (42a) via une partie de tuyau courbée (42b) qui est courbée dans l'espace intérieur ou à l'extérieur de l'espace intérieur, la seconde partie de tuyau (42c) constituant un chemin de sortie pour le fluide cible de chauffage depuis l'espace intérieur, et
    dans lequel l'ouverture est positionnée au centre de l'unité de libération de chaleur (40) dans une vue plane de l'unité de libération de chaleur (40) et la première partie de tuyau (42a), et la seconde partie de tuyau (42c) sont positionnées entre le tuyau d'alimentation en fluide (50) et des surfaces latérales d'un carter (41) de l'unité de libération de chaleur (40) dans une vue plane de l'unité de libération de chaleur (40).

2.  Dispositif de récupération de chaleur d'échappement selon la revendication 1, dans lequel la partie de tuyau courbée (42b) est disposée dans l'espace intérieur de l'unité de libération de chaleur (40) pour coupler la première partie de tuyau (42a) à la seconde partie de tuyau (42c), et dans lequel l'ouverture du tuyau d'alimentation en fluide (50) est positionnée pour alimenter le fluide en phase gazeuse vers un espace entouré par la première partie de tuyau (42a), la partie de tuyau courbée (42b) et la seconde partie de tuyau (42c).

3.  Dispositif de récupération de chaleur d'échappement selon la revendication 1 ou 2, dans lequel l'unité de libération de chaleur (40) est disposée directement au-dessus de l'unité de réception de chaleur (30), et dans lequel le tuyau d'alimentation en fluide (50) couple une partie supérieure de l'unité de réception de chaleur (30) à une partie inférieure de l'unité de libération de chaleur (40) pour permettre une communication mutuelle entre un espace intérieur de l'unité de réception de chaleur (30) et l'espace intérieur de l'unité de libération de chaleur (40).

4.  Dispositif de récupération de chaleur d'échappement selon la revendication 3, dans lequel la première partie de tuyau (42a) et la seconde partie de tuyau (42c) sont positionnées entre le tuyau d'alimentation en fluide (50) et des surfaces latérales d'un carter (41) de l'unité de libération de chaleur (40), dans une vue plane de l'unité de libération de chaleur (40).

5.  Dispositif de récupération de chaleur d'échappement selon la revendication 3, ou 4, dans lequel le tuyau d'alimentation en fluide (50) comporte une extrémité supérieure dans l'espace intérieur de l'unité de libération de chaleur (40) en une position en hauteur qui est la même qu'une hauteur d'extrémité inférieure de chacune de la première partie de tuyau (42a) et de la seconde partie de tuyau (42c), ou qui est inférieure à la hauteur d'extrémité inférieure de chacune de la première partie de tuyau (42a) et de la seconde partie de tuyau (42c).

6.  Dispositif de récupération de chaleur d'échappement selon l'une quelconque des revendications 3 à 5, dans lequel la première partie de tuyau (42a), la partie de tuyau courbée (42b), et la seconde partie de tuyau (42c) sont disposées sur un plan horizontal imaginaire commun.

7. Véhicule comprenant le dispositif de récupération de chaleur d'échappement (20) selon l'une quelconque des revendications 3-6, dans lequel le dispositif de récupération de chaleur d'échappement (20) est configuré pour récupérer de la chaleur du gaz d'échappement déchargé depuis un moteur à combustion interne (1) installé dans le véhicule, et dans lequel l'unité de réception de chaleur (30) et l'unité de libération de chaleur (40) sont logées dans un espace sous une partie tunnel (17a) formée sur un plancher de véhicule (17).

8. Véhicule selon la revendication 7 ou véhicule comprenant le dispositif de récupération de chaleur (20) selon l'une quelconque des revendications 3 à 6, dans lequel la première partie de tuyau (42a), la seconde partie de tuyau (42c), et la partie de tuyau courbée (42b) sont respectivement positionnées vers la droite du véhicule, vers la gauche du véhicule, et vers l'avant ou l'arrière du véhicule relativement à l'extrémité supérieure du tuyau d'alimentation en fluide (50).

FIG.1

FIG.2

FIG.3

EP 2 472 208 B1

FIG.4

## FIG.5

FIG.6

FIG.7A

FIG.7B

FIG.7C

FIG.7D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009008318 A
- JP 2007170299 A
- US 20070000453 A
- FR 875664